# EUROPÄISCHE PATENTANMELDUNG

(11) **EP 2 262 088 A1**
(43) Veröffentlichungstag der Anmeldung: **15.12.2010**
(21) Anmeldenummer: 09162384.3
(22) Anmeldetag: 10.06.2009
(51) Int. Cl.: H02M 3/335

(54) **DC-DC-Wandlerschaltung mit einem Umrichter**

(71) Anmelder: ABB Research Ltd., 8050 Zürich (CH)
(72) Erfinder: Coccia, Antonio, CH-5400, Baden (CH); Canales, Francisco, CH-5405, Baden-Dättwil (CH); Ho, Ngai-Man, CH-5442, Fislisbach (CH); De-Novaes, Yales, CH-5415, Nussbaumen (CH)
(74) Vertreter: ABB Patent Attorneys

(57) **Zusammenfassung**

Die Erfindung betrifft eine DC-DC-Wanderschaltung (1) zum Umwandeln einer Eingangsgröße (U_{In}) in eine Ausgangsgröße (U_{A}), umfassend:
- einen Umrichter (2) zum Empfangen der Eingangsgröße und zum Generieren einer getakteten Umrichterausgangsgröße (U_{AB});
- einen Transformator (5) zum Umsetzen einer von der Umrichterausgangsgröße (U_{AB}) des Umrichter (2) abhängigen Primärgröße in eine Sekundärgröße;
- einen Gleichrichter (6) zum Generieren der Ausgangsgröße (U_{A}) durch Gleichrichten der von dem Transformator (5) bereitgestellten Sekundärgröße,

wobei der Umrichter (2) einem Mehr-Pegel-Umrichter entspricht, der durch serielle Verschaltung von mehreren drei- oder mehrstufigen Stellerschaltungen (21, 22) ausgebildet ist, wobei mindestens zwei der Stellerschaltungen (21, 22) einen Umrichterausgang (A, B) aufweisen, um die Umrichterausgangsgröße (U_{AB}) bereitzustellen.

## Beschreibung

### Technisches Gebiet

Die Erfindung betrifft DC-DC-Wandlerschaltungen, insbesondere Wandlerschaltungen, die einen Umrichter und einen Transformator aufweisen.

### Stand der Technik

DC-DC-Wandlerschaltungen werden heute für viele Anwendungsbereiche verwendet. Eine DC-DC-Wandlerschaltung dient der Umsetzung einer ersten Gleichspannung in eine zweite Gleichspannung. Dabei wird häufig eine galvanische Trennung zwischen dem Eingang und dem Ausgang der DC-DC-Wandlerschaltung mit Hilfe eines Transformators vorgesehen.

Eine solche DC-DC-Wandlerschaltung ist beispielsweise aus der DE 19 750 041 C1 bekannt. Die dort gezeigte Wandlerschaltung umfasst einen Hochsetzsteller, an den ausgangsseitig ein Umrichter geschaltet ist, um eine Wechselspannung zum Anlegen an eine Primärseite eines Transformators bereitzustellen. Weiterhin ist ein kapazitiver Energiespeicher vorgesehen, der mit dem Transformator verbunden ist. Eine Sekundärseite des Transformators ist über einen Brückengleichrichter mit einem Ausgang der DC-DC-Wandlerschaltung verbunden, um so eine gewandelte Ausgangsgleichspannung zur Verfügung zu stellen.

Der Hochsetzsteller und der Umrichter werden derart angesteuert, dass der kapazitive Energiespeicher, die Drossel- und die Streuinduktivität des Transformators einen Resonanzschwingkreis bilden, d. h. der Hochsetzsteller legt ausgangsseitig an die kapazitiven Energiespeicher eine entsprechende Wechselspannung durch Takten der Gleichspannung an seinem Eingang an, so dass der Resonanzschwingkreis in Resonanz versetzt wird.

Bei derart aufgebauten Stellerschaltungen stellen insbesondere bei hohen abgerufenen Leistungen die Schaltverluste der Leistungshalbleiterschalter des Hochsetzstellers und des Umrichters einen Nachteil dar, der zu einer beschleunigten Alterung der Leistungshalbleiterschalter und damit zu einer erhöhten Ausfallrate führt. Dadurch ist die Zuverlässigkeit der gesamten Wandlerschaltung begrenzt.

Auch aus der Druckschrift US 6,344,979 B1 ist eine Wandlerschaltung bekannt, die einen Resonanzumrichter, einen Transformator und einen Gleichrichter aufweist. Zwischen dem Resonanzumrichter und dem Transformator ist eine CLL-Resonanzschaltung vorgesehen.

### Darstellung der Erfindung

Es ist Aufgabe der vorliegenden Erfindung, eine DC-DC-Wandlerschaltung zur Verfügung zu stellen, bei der die Schaltverluste der Leistungshalbleiterschalter gegenüber Wandlerschaltungen des Stands der Technik reduziert sind. Insbesondere ist es Aufgabe der vorliegenden Erfindung, ein Verfahren zum Betreiben einer DC-DC-Wandlerschaltung bereitzustellen, bei dem möglichst geringe Schaltverluste in einer DC-DC-Wandlerschaltung auftreten. Es ist weiterhin Aufgabe der vorliegenden Erfindung, eine alternative Lösung für eine DC-DC-Wandlerschaltung zur Verfügung zu stellen.

Diese Aufgaben werden durch die DC-DC-Wandlerschaltung gemäß Anspruch 1 sowie das Verfahren zum Betreiben einer solchen DC-DC-Wandlerschaltung gemäß dem nebengeordneten Anspruch gelöst.

Weitere vorteilhafte Ausgestaltungen sind in den abhängigen Ansprüchen angegeben.

Gemäß einem ersten Aspekt ist eine DC-DC-Wanderschaltung zum Umwandeln einer Eingangsgröße in eine Ausgangsgröße vorgesehen. Die Wandlerschaltung umfasst:
- einen Umrichter zum Empfangen der Eingangsgröße und zum Generieren einer getakteten Umrichterausgangsgröße;
- einen Transformator zum Umsetzen einer von der Umrichterausgangsgröße des Umrichter abhängigen Primärgröße in eine Sekundärgröße;
- einen Gleichrichter zum Generieren der Ausgangsgröße durch Gleichrichten der von dem Transformator bereitgestellten Sekundärgröße,
wobei der Umrichter einem Mehr-Pegel-Umrichter entspricht, der durch serielle Verschaltung von mehreren drei- oder mehrstufigen Stellerschaltungen ausgebildet ist, wobei mindestens zwei der Stellerschaltungen einen Umrichterausgang aufweisen, um die Umrichterausgangsgröße bereitzustellen.

Die obige Wandlerschaltung ermöglicht in einfache Weise den Spannungsstress über den Schaltern der Stellerschaltungen zu reduzieren. Weiterhin kann die Wandlerschaltung mit verschiedenen Modulationsstrategien betrieben werden, ohne die Leistungsfähigkeit der Wandlerschaltung zu beeinträchtigen. So ermöglicht die mehr als zweistufige Konfiguration des Umrichters die Anwendung von Modulationsstrategien für die Ansteuerung der Stellerschaltungen, die das leistungslose Schalten von darin vorgesehenen Leistungshalbleiterschaltern vorsehen.

Weiterhin kann der Umrichter als 5-Pegel-Umrichter vorgesehen sein, wobei die Stellerschaltungen als dreistufige Stellerschaltungen ausgebildet sind. Insbesondere kann die dreistufige Stellerschaltung eine Serienschaltung eines ersten Leistungshalbleiterschalters, eines zweiten Leistungshalbleiterschalters, eines dritten Leistungshalbleiterschalters und eines vierten Leistungshalbleiterschalters aufweisen, wobei ein erster Anschluss des ersten Leistungshalbleiterschalters mit einem hohen Potenzial und ein zweiter Anschluss des vierten Leistungshalbleiterschalters mit einem niedrigen Potenzial verbunden ist, wobei ein zweiter Anschluss des ersten Leistungshalbleiterschalters und ein erster Anschluss des vierten Leistungshalbleiterschalters über eine Zwischenkapazität verbunden sind, und wobei der erste Anschluss des ersten Leistungshalbleiterschalters und der zweite Anschluss des vierten Leistungshalbleiterschalters über eine Zwischenkreiskapazität verbunden sind.

Gemäß einer weiteren Ausführungsform kann die Umrichterausgangsgröße zwischen einem ersten und einem zweiten Umrichterausgang abgreifbar sein, wobei der erste Umrichterausgang an der Verbindung zwischen dem zweiten und dritten Leistungshalbleiterschalter einer der Stellerschaltungen und wobei der zweite Umrichterausgang an der Verbindung zwischen dem zweiten und dritten Leistungshalbleiterschalter einer weiteren der Stellerschaltungen abgreifbar ist.

Zwischen dem Umrichter und dem Transformator kann eine Resonanzschaltung vorgesehen ist, um einen Resonanzkreis mit der Primärseite des Transformators zu bilden, wobei die Resonanzschaltung eine erste Resonanzinduktivität, die in Reihe zu einer Primärseite des Transformators, eine zweite Resonanzinduktivität, die parallel zur Primärseite des Transformators und eine Resonanzkapazität, die in Reihe zur Primärseite des Transformators geschaltet sind.

Gemäß einer weiteren Ausführungsform kann der Gleichrichter, der an einer Sekundärseite des Transformators, an der die Sekundärgröße bereitgestellt wird, angeschlossen ist, als Diodenbrückengleichrichter, als aktiver Vollbrückengleichrichter oder als aktiver Halbbrückengleichrichter ausgebildet sein. Alternativ kann Transformator mehrere Sekundärspulen aufweisen, wobei Ausgänge der Sekundärspulen gleichgerichtet werden und die gleichgerichteten Ausgänge parallel geschaltet sind.

Es kann eine Steuereinheit vorgesehen sein, um Leistungshalbleiterschalter der Stellerschaltungen so anzusteuern, dass der Umrichterausgangsgröße mit einer Frequenz bereitgestellt wird, die einer Resonanzfrequenz eines mit der Primärseite des Transformators gebildeten Resonanzkreises entspricht, wobei die Steuereinheit ausgebildet ist, um mit Hilfe einer Pulsweiten- oder Phasenmodulation von Steuersignalen für die Leistungshalbleiterschalter die Ausgangsgröße zu variieren.

Alternativ kann eine Steuereinheit vorgesehen sein, um Leistungshalbleiterschalter der Stellerschaltungen so anzusteuern, dass die Umrichterausgangsgröße mit einer Frequenz bereitgestellt wird, die kleiner ist als eine Resonanzfrequenz eines mit der Primärseite des Transformators gebildeten Resonanzkreises, wobei die Steuereinheit ausgebildet ist, um die vorbestimmte Ausgangsgröße durch Variieren der Frequenz der Umrichterausgangsgröße zu variieren.

Gemäß einem weiteren Aspekt ist ein Verfahren zum Betreiben der obigen Wandlerschaltung vorgesehen, wobei die Leistungshalbleiterschalter der Stellerschaltungen so angesteuert werden, dass der Umrichterausgangsgröße mit einer Frequenz bereitgestellt wird, die einer Resonanzfrequenz eines mit der Primärseite des Transformators gebildeten Resonanzkreises entspricht, wobei die Steuersignale für die Leistungshalbleiterschalter mit Hilfe einer Pulsweiten oder Phasenmodulation variiert werden, um die vorbestimmte Ausgangsgröße bereitzustellen.

Alternativ kann gemäß einem weiteren Aspekt ein Verfahren zum Betreiben der obigen Wandlerschaltung vorgesehen sein, wobei Leistungshalbleiterschalter der Stellerschaltungen so angesteuert werden, dass die Umrichterausgangsgröße mit einer Frequenz bereitgestellt wird, die kleiner ist als die Resonanzfrequenz eines mit der Primärseite des Transformators gebildeten Resonanzkreises, wobei die vorbestimmte Ausgangsgröße durch Variieren der Frequenz der Umrichterausgangsgröße variiert wird.

Gemäß einem weiteren Aspekt kann Wandlersystem mit mehreren der obigen Wandlerschaltungen vorgesehen sein, wobei die Umrichter der Wandlerschaltungen eingangsseitig seriell verschaltet sind und die Wandlerausgänge miteinander parallel verschaltet sind.

### Kurze Beschreibung der Zeichnungen

Bevorzugte Ausführungsformen werden nachfolgend anhand der beigefügten Zeichnungen näher erläutert. Es zeigen:
- Fig. 1: eine schematische Darstellung einer DC-DC-Wandlerschaltung;
- Fig. 2: ein Diagramm zur Veranschaulichung der Strom- und Spannungsverläufe abhängig von der Ansteuerung der Leistungshalbleiterschalter bei einem 2- Pegelbetrieb;

- Fig. 3: ein Diagramm zur Darstellung der Verläufe von Strom und Spannung abhängig von der Ansteuerung der Leistungshalbleiterschalter bei einem 3- Pegelbetrieb;
- Fig. 4: ein Diagramm zur Darstellung der Verläufe der Ströme und Spannungen abhängig von der Ansteuerung der Leistungshalbleiterschalter bei einem 5- Pegelbetrieb;
- Fig. 5a bis Fig. 5c: alternative Ausgestaltungen des Ausgangsgleichrichters;
- Fig. 6: ein vereinfachtes Blockdiagramm, das eine mögliche Ausgestaltung eines Wandlersystems mit mehreren DC-DC-Wandlerschaltungen darstellt;
- Fig. 7: eine Darstellung einer DC-DC-Wandlerschaltung mit einer seriellen Verschaltung von Stellerschaltungen, um die umsetzbare Eingangsspannung der DC-DC-Wandlerschaltung zu erhöhen; und

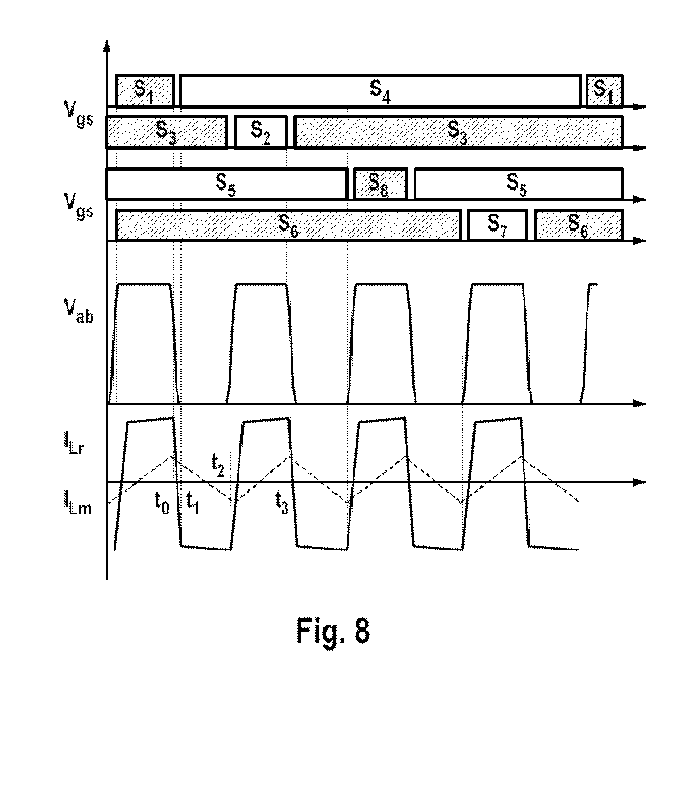

- Fig. 8: ein Diagramm zur Darstellung der Verläufe von Strömen und Spannungen abhängig von der Ansteuerung der Leistungshalbleiterschalter bei einem Pulsweitenmodulationsbetrieb.

### Wege zur Ausführung der Erfindung

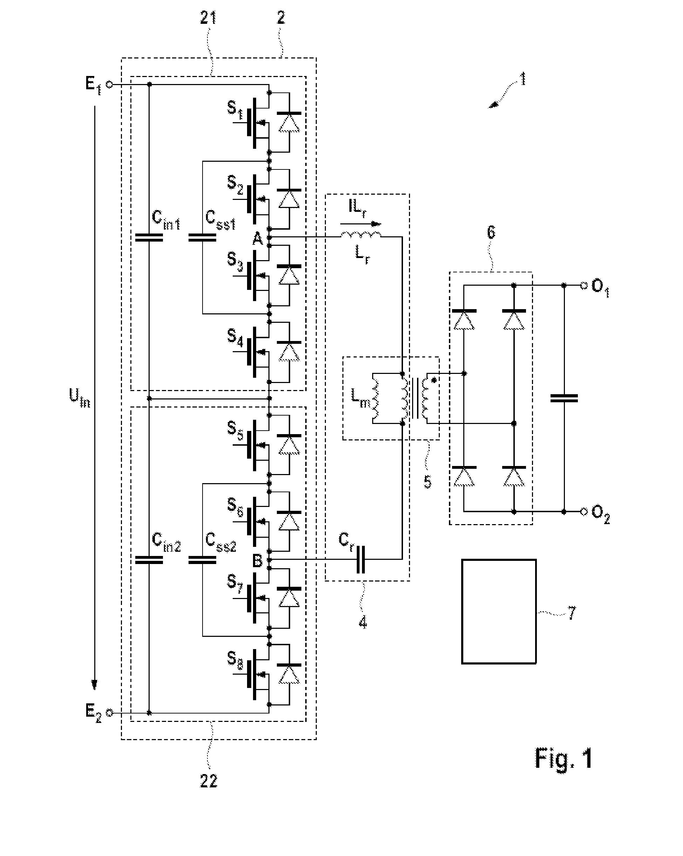

Figur 1 zeigt eine schematische Darstellung einer DC-DC-Wandlerschaltung 1. Die DC-DC-Wandlerschaltung 1 umfasst einen 5-Pegel-Umrichter 2. Der 5-Pegel-Umrichter 2 weist zwei Umrichtereingänge auf, die mit zwei Wandlereingängen E₁, E₂ verbunden sind. Zwischen den Wandlereingängen E₁, E₂ ist eine Eingangsspannung U_{In} als Eingangsgröße anlegbar. Der 5-Pegel-Umrichter 2 umfasst weiterhin zwei Umrichterausgänge A, B. Die Umrichterausgänge A, B sind über eine CLL-Resonanzschaltung 4 mit einer Primärseite eines Transformators 5 verbunden. Eine Sekundärseite des Transformators 5 ist über einen Brückengleichrichter 6 mit Ausgangsanschlüssen O₁, O₂ der Wandlerschaltung 1 verbunden.

Zwischen den Ausgangsanschlüssen O₁, O₂ ist eine Ausgangskapazität C_{A} angeordnet. An den Ausgangsanschlüssen ist eine Ausgangsspannung U_{A} als Ausgangsgröße abgreifbar.

Der 5-Pegel-Umrichter 2 umfasst zwei Stellerschaltungen 21, 22. Eine erste der Stellerschaltungen 21, 22 ist zwischen einem ersten Eingangsanschluss E₁ und einem Zwischenkreisknoten Z geschaltet. Die erste Stellerschaltung 21 umfasst eine erste Eingangskapazität Cᵢₙ₁, die zwischen dem ersten Eingangsanschluss E₁ und dem Zwischenkreisknoten Z geschaltet ist. Weiterhin sind vier Leistungsschalter S in einer Serienschaltung vorgesehen. Im Detail sind ein erster Anschluss eines ersten Leistungshalbleiterschalters S₁ mit dem ersten Eingangsanschluss E₁ und ein zweiter Anschluss des ersten Leistungshalbleiterschalters S₁ mit einem ersten Anschluss eines zweiten Leistungshalbleiterschalters S₂ verbunden. Ein zweiter Anschluss des zweiten Leistungshalbleiterschalters S₂ ist mit einem ersten Anschluss eines dritten Leistungshalbleiterschalters S₃ verbunden. Ein zweiter Anschluss des dritten Leistungshalbleiterschalters S₃ ist mit einem ersten Anschluss eines vierten Leistungshalbleiterschalters S₄ verbunden. Ein zweiter Anschluss des vierten Leistungshalbleiterschalters S₄ ist mit dem Zwischenkreispunkt Z verbunden. Steueranschlüsse (Gate-Anschlüsse) der Leistungshalbleiterschalter S₁ bis S₄ sind mit einer Steuereinheit 10 verbunden, die die Leistungshalbleiterschalter S₁ bis S₄ gemäß einem nachfolgend beschriebenen Betriebsverfahren ansteuert. Es ist weiterhin eine erste Zwischenkapazität C_{SS1} vorgesehen, die mit einem ersten Anschluss mit dem ersten Anschluss des zweiten Leistungshalbleiterschalters S₂ und mit einem zweiten Anschluss mit dem zweiten Anschluss des dritten Leistungshalbleiterschalters S₃ verbunden ist.

Eine zweite der Stellerschaltungen 22 ist im Wesentlichen analog aufgebaut. Die zweite Stellerschaltung 22 ist zwischen einem Zwischenkreisknoten Z und einem zweiten Eingangsanschluss E₂ geschaltet. Die zweite Stellerschaltung 21 umfasst eine zweite Eingangskapazität Cᵢₙ₂, die zwischen dem Zwischenkreisknoten Z und dem zweiten Eingangsanschluss E₂ geschaltet ist. Weiterhin sind vier Leistungsschalter S in einer Serienschaltung vorgesehen. Im Detail ist ein erster Anschluss eines fünften Leistungshalbleiterschalters S₅ mit dem Zwischenkreisknoten Z und ein zweiter Anschluss des fünften Leistungshalbleiterschalters S₅ mit einem ersten Anschluss eines sechsten Leistungshalbleiterschalters S₆ verbunden. Ein zweiter Anschluss des sechsten Leistungshalbleiterschalters S₆ ist mit einem ersten Anschluss eines siebenten Leistungshalbleiterschalters S₇ verbunden. Ein zweiter Anschluss des siebenten Leistungshalbleiterschalters S₇ ist mit einem ersten Anschluss eines achten Leistungshalbleiterschalters S₈ verbunden. Ein zweiter Anschluss des achten Leistungshalbleiterschalters S₈ ist mit dem zweiten Eingangsanschluss E₂ verbunden. Steueranschlüsse der Leistungshalbleiterschalter S₅ bis S₈ sind mit der Steuereinheit 10 verbunden, die die Leistungshalbleiterschalter S₅ bis S₈ gemäß einem nachfolgend beschriebenen Betriebsverfahren ansteuert. Es ist weiterhin eine zweite Zwischenkapazität C_{SS2} vorgesehen, die mit einem ersten Anschluss mit dem ersten Anschluss des sechsten Leistungshalbleiterschalters S₆ und mit einem zweiten Anschluss mit dem zweiten Anschluss des siebenten Leistungshalbleiterschalters S₇ verbunden ist.

Als Leistungshalbleiterschalter S₁ bis S₈ werden vorzugsweise bidirektionale Leistungshalbleiterschalter, wie z. B. IGBTs, IGCTs, Thyristoren und dergleichen verwendet. Vorzugsweise können die bidirektionalen Leistungshalbleiterschalter jeweils als ein integrierter über die Ansteueranschlüsse kommutierter Thyristor (IGCT: Integrated Gate-Commutated Thyristor) mit einer zugehörigen parallel geschalteten Freilaufdiode DS₁ bis DS₈ ausgebildet sein. Ein solcher Thyristor weist besonders geringe Wirkleistungsverluste bei gleichzeitig hoher Robustheit, vor allem bei hohen Spannungen und insbesondere Überspannungen, auf. Alternativ ist es möglich, die bidirektionalen Leistungshalbleiterschalter jeweils als einen Bipolartransistor mit isoliert angeordnetem Steueranschluss (IGBT: Integrated Gate Bipolar Transistor) mit einer zugehörigen parallel geschalteten Freilaufdiode auszubilden. Ein solcher Leistungshalbleiterschalter zeichnet sich durch eine hohe Schaltfrequenz und damit durch geringe Schwingungen der geschalteten Ströme und Spannungen aus.

Mindestens ein Teil der bidirektionalen Leistungshalbleiterschalter S₁ bis S₈ können auf Siliziumbasis oder Siliziumkarbidbasis ausgebildet sein.

Die erste bzw. zweite Zwischenkapazität Cₛₛ₁, Cₛₛ₂ bewirken jeweils eine Stabilisierung der Spannung an den Leistungshalbleiterschaltern S₁ bis S₄ bzw. S₅ bis S₈ und stellen darüber hinaus - bei geeigneter Ansteuerung - ein Viertel der Eingangsspannung U_{In} zur Verfügung, die zwischen den Eingangsanschlüssen E₁, E₂ angelegt ist. Somit können die seriell verschalteten Stellerschaltungen 21, 22 als 5-Pegel-Umrichter 2 betrieben werden, da je nach geeigneter Ansteuerung der Leistungshalbleiterschalter S₁ - S₈ fünf Ausgangspotentiale bereitgestellt werden können, nämlich 0V, ¼ U_{In}, ½ U_{In}, ¾ U_{In}, U_{In}.

Der 5-Pegel-Aufbau des Umrichters 2 hat den Vorteil, dass die Spannungsbelastung über den Leistungshalbleiterschaltern S₁ bis S₈ nur ein Viertel der Eingangsspannung U_{In} beträgt.

Die Umrichterausgänge A, B des 5-Pegel-Umrichters 2 sind über die Resonanzschaltung 4 mit der Primärseite des Transformators 5 verbunden. Die Resonanzschaltung 4 umfasst eine erste Resonanzinduktivität Lᵣ, die zwischen dem ersten Umrichterausgang A und einem ersten Anschluss einer Primärspule des Transformators 5 angeschlossen ist. Der zweite Umrichterausgang B ist über eine Resonanzkapazität Cᵣ mit einem zweiten Anschluss der Primärspule des Transformators 5 verbunden. Der erste und zweite Anschluss der Primärspule des Transformators 5 sind über eine zweite Resonanzinduktivität Lₘ miteinander verbunden.

Die serielle erste Resonanzinduktivität Lᵣ kann als separates Bauelement oder kann mit Hilfe der Verlustinduktanz implementiert werden. Mit anderen Worten kann die erste Resonanzinduktivität Lᵣ integriert in die Primärspule realisiert werden, indem die Kopplung zwischen der Primärspule und der Sekundärspule des Transformators 5 verringert wird. Die zweite parallele Resonanzinduktivität Lₘ kann als separates Bauelement oder mit Hilfe der magnetischen Induktanz des Transformators vorgesehen werden und kann beispielsweise durch eine Unterbrechung des magnetischen Kerns des Transformators 5 ausgebildet werden. Somit lassen sich die erste und zweite Resonanzinduktivität Lᵣ, Lₘ durch entsprechende Konfiguration des Transformators 5 ausbilden. Es ist somit nicht notwendig, separate induktive Bauelemente vorzusehen.

Eine Sekundärspule des Transformators 5 ist über den Brückengleichrichter 6 mit den Ausgangsanschlüssen O₁, O₂ verbunden. Der Brückengleichrichter 6 kann als DiodenBrückengleichrichter, wie in Figur 1 gezeigt, ausgebildet sein. Es ist jedoch auch möglich, andere Arten von Gleichrichtern stattdessen einzusetzen.

Die Steuereinheit 10 kann die Leistungshalbleiterschalter S₁ bis S₈ in einer ersten Betriebsart so ansteuern, dass deren Schaltfrequenzen unterhalb der Resonanzfrequenz der Resonanzschaltung 4 liegen. Der Magnetisierungsstrom, der durch die erste Resonanzinduktivität Lᵣ fließt, kann dann dazu verwendet werden, um eine Betriebsbedingung zu erreichen, bei der ein Schalten der Leistungshalbleiterschalter im Spannungsnulldurchgang (ZVS: Zero Voltage Switching) erreicht wird. Dadurch können die Schaltverluste der bidirektionalen Leistungshalbleiterschalter S₁ - S₈ des Umrichters 2 reduziert werden, wodurch sich deren Belastung verringert und die Lebensdauer entsprechend erhöht. Dadurch kann die Zuverlässigkeit der gesamten DC-DC-Wandlerschaltung 1 deutlich erhöht werden.

Weiterhin können die Stellerschaltungen 21, 22 in einem Arbeitsbereich betrieben werden, in dem der Gleichtakt-Gewinn von den Lastschwankungen einer Last an den Wandlerausgängen O₁, O₂ unabhängig wird. In diesem Fall werden die Stellerschaltungen 21, 22 in einem Leerlaufbetrieb betrieben, der die Optimierung des Transformators 5 ermöglicht. Aufgrund der Eigenschaften des Umrichters 2 arbeiten die den bidirektionalen Leistungshalbleiterschaltern S₁ bis S₈ jeweils parallel geschalteten gegenläufigen Freilaufdioden DS₁ bis DS₈ in einem ZCS-Betrieb (ZCS: Zero Current Switching), bei dem das Schalten der Freilaufdioden DS₁ bis DS₈ stromlos erfolgt. Dadurch können die Sperrverzögerungsverluste (Reverse Recovery Losses) vermieden werden. Daher können sehr schnelle Siliziumdioden aus dem Stand der Technik verwendet werden.

Der Umrichter ist zwar als 5-Pegel-Umrichter ausgebildet kann jedoch mit einer 2-Pegel-, 3-Pegel- oder 5-Pegel-Modulationsstrategie ohne Leistungseinbußen betrieben werden. Dadurch kann der Umrichter als elektronischer Transformator mit einem variablen Windungsverhältnis arbeiten.

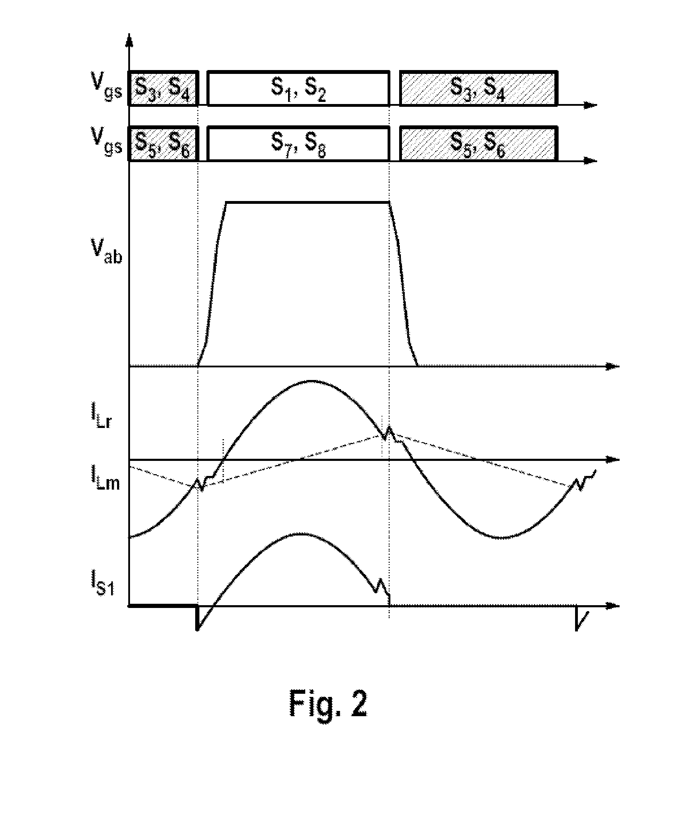

Die Figuren 2 bis 4 zeigen die Verläufe der von der Steuereinheit 10 gemäß einer gewählten Modulationsstrategie bereitgestellten Gate-Signale für die Ansteuerung der Leistungshalbleiterschalter S₁ bis S₈. Die Spannung zwischen dem ersten Umrichterausgang A und dem zweiten Umrichterausgang B sowie die Verläufe der Ströme durch die erste Resonanzinduktivität Lᵣ, die zweite Resonanzinduktivität Lₘ sowie durch den ersten Leistungshalbleiterschalter S₁.

Um bei jeder möglichen Eingangsspannung U_{In} den gleichen Gleichtaktgewinn zu garantieren, muss die Einschaltzeit der Leistungshalbleiterschalter S₁, S₂, S₅ und S₇ gleich und konstant für alle Modulationsstrategien sein. Um diese Anforderung zu erfüllen, kann sich die Schaltfrequenz bei jeder Modulationsstrategie unterscheiden. In diesem Fall wird für jede Modulationsstrategie eine unterschiedliche Schaltfrequenz gewählt. So entspricht die Schaltfrequenz für die 2-Pegel-Modulation (eine Modulation, bei der eine Ausgangswechselspannung durch Variation zwischen zwei Spannungspegeln generiert wird) f, für die 3-Pegel-Modulation (eine Modulation, bei der eine Ausgangswechselspannung durch Variation zwischen drei Spannungspegeln generiert wird) f/2 und für die 5-Pegel-Modulation (eine Modulation, bei der eine Ausgangswechselspannung durch Variation zwischen fünf Spannungspegeln generiert wird) f/4. Dadurch wird eine gleiche äquivalente Frequenz über der Resonanzschaltung 4 und dem Transformator 5 ungeachtet der Modulationsstrategie erreicht. Selbstverständlich sind dies nur Beispiele und auch andere Modulationsstrategien können zu ähnlichen Betriebsbedingungen führen.

Die Kombination des oben beschriebenen Aufbaus des 5-Pegel-Umrichters 2 mit der Resonanzschaltung 4 ermöglicht einen Betrieb mit sehr hoher Frequenz und mit hohem Wirkungsgrad. D.h. die Frequenz der Umrichterausgangsgröße an dem Umrichterausgang ist höher als die Resonanzfrequenz des mit der Resonanzschaltung 4 gebildeten Resonanzkreises. Auf diese Weise kann die Leistungsdichte der DC-DC-Wandlerschaltung im Vergleich zu herkömmlichen Wandlerschaltungen stark erhöht werden.

In Figur 2 ist die Modulationsstrategie für den 2-Pegel-Betrieb und für eine Eingangsspannung von V_{In} dargestellt. Bei dieser Modulationsstrategie werden die Leistungshalbleiterschalter S₁, S₂ und S₃, S₄ im Wechsel und die Leistungshalbleiterschalter S₅, S₆ und S₇, S₈ ebenfalls im Wechsel geschaltet, so dass an dem ersten Umrichterausgang A entweder das Potential des ersten Eingangsanschlusses E₁ oder das Potential des Zwischenkreispunkts Z angelegt ist und an dem zweiten Umrichterausgang B das Potential des zweiten Eingangsanschlusses E₂ oder das Potential des Zwischenkreispunkts Z angelegt ist. In diesem Fall wird eine rechteckförmige Umrichterspannung U_{AB} mit einer maximalen Spannung bereitgestellt, die der Eingangsspannung Uᵢₙ entspricht. Die Schaltfrequenz entspricht einer Frequenz, die kleiner ist als die Resonanzfrequenz der Resonanzschaltung. Durch Variation der Frequenz kann die Spannung an der Primärspule des Transformators 5 variiert werden.

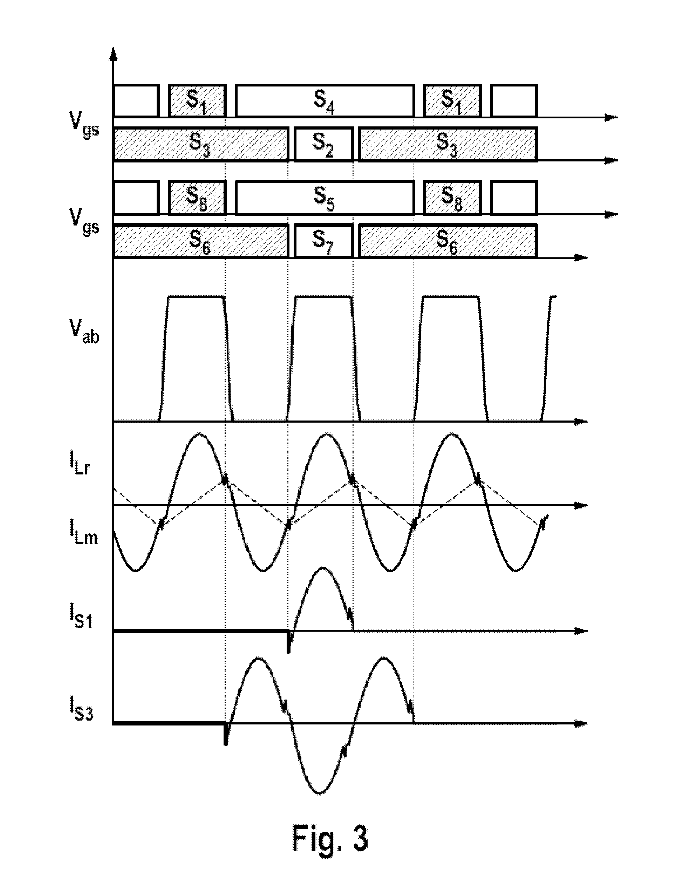

In Figur 3 ist eine Modulationsstrategie für einen 3-Pegel-Betrieb dargestellt. In diesem Fall wird, ebenso wie bei der Modulationsstrategie der Figur 2, eine rechteckförmige

Umrichterspannung U_{AB} bereitgestellt, jedoch entspricht die Umrichterspannung U_{AB} nur der halben Eingangsspannung U_{In}. Die Schaltfrequenz ist gegenüber der Modulationsstrategie der Figur 2 verdoppelt. Bei dieser Modulationsstrategie wird jeweils gleichzeitig beim Anlegen der Umrichterspannung U_{AB} ein Stromfluss durch die Zwischenkapazitäten C_{SS1}, C_{SS2} in einer Richtung und bei der nächsten Periode in entgegengesetzter Richtung bewirkt, so dass dort die Spannungen über die Zwischenkapazitäten C_{SS1}, C_{SS2} den Wert U_{In}/4 einnehmen. Dies erfolgt wechselweise durch Durchschalten des ersten, dritten, sechsten und achten Leistungshalbleiterschalter S₁, S₃, S₆, S₈ in einer ersten Zeitperiode und durch Durchschalten des zweiten, vierten, fünften und siebenten Leistungshalbleiterschalter S₂, S₄, S₅, S₇ in einer zweiten Zeitperiode bei jeweils ausgeschalteten übrigen Leistungshalbleiterschalter, wobei die erste und die zweite Zeitperioden jeweils einer Halbperiode der Schaltfrequenz entsprechen. In den jeweiligen Halbperioden zwischen der ersten und zweiten Zeitperioden des Ausgebens der Umrichterspannung U_{AB} werden sowohl der dritte und vierte Leistungshalbleiterschalter S₃, S₄ als auch der fünfte und sechste Leistungshalbleiterschalter S₅, S₆ durchgeschaltet, so dass beide Umrichterausgänge A, B das Zwischenkreispotential einnehmen. Die Umrichterspannung U_{AB} beträgt dann 0V.

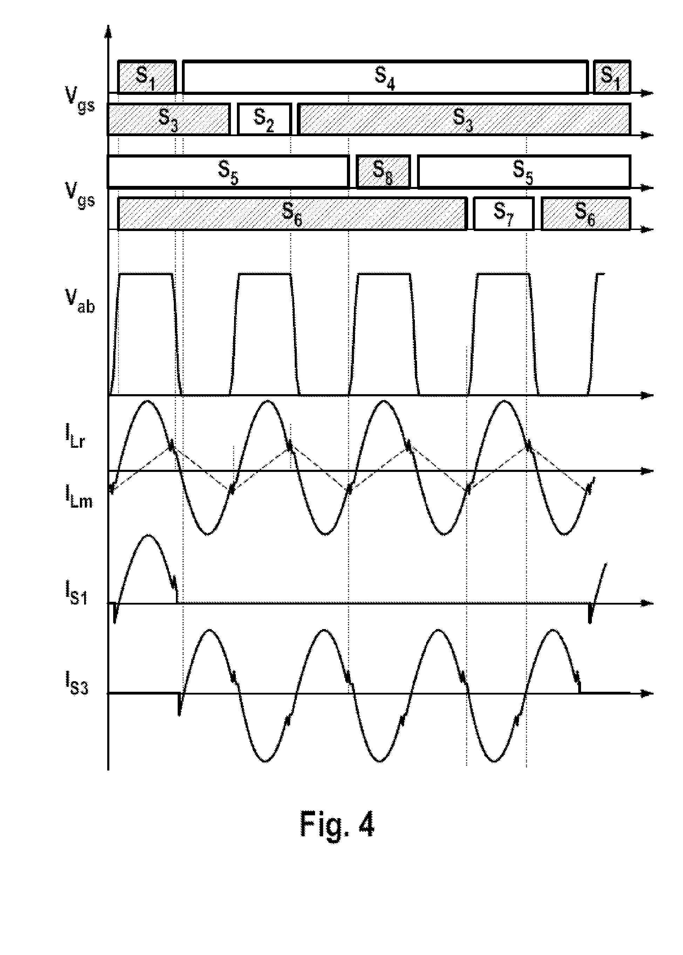

Bei der in Figur 4 gezeigten Modulationsstrategie für einen 5-Pegel-Betrieb ist die Schaltfrequenz gegenüber der Modulationsstrategie, die in Fig. 2 dargestellt ist, vervierfacht. Die Zeitperiode zur Ausgabe einer einzelnen Umrichterspannung entspricht einem Viertel der Zeitperiode der Schaltfrequenz bei der Modulationsstrategie der Figur 2. Das Ausgeben der Umrichterspannung U_{AB} wird aufeinander folgend durch ein jeweiliges Einschalten des ersten Leistungshalbleiterschalters S₁ bei eingeschaltetem dritten, fünften und sechsten Leistungshalbleiterschalter S₃, S₅, S₆ (die übrigen Leistungshalbleiterschalter sind ausgeschaltet), des zweiten Leistungshalbleiterschalters S₂ bei eingeschaltetem vierten, fünften und sechsten Leistungshalbleiterschalter S₄, S₅, S₆, des achten Leistungshalbleiterschalters S₈ bei eingeschaltetem dritten, vierten und sechsten Leistungshalbleiterschalter S₃, S₄, S₆ und des siebten Leistungshalbleiterschalters S₇ bei eingeschaltetem dritten, vierten und sechsten Leistungshalbleiterschalter S₃, S₄, S₆ für jeweilige Zeitperioden erzeugt. Zwischen den jeweiligen Zeitperioden sind der dritte, vierte, fünfte und sechste Leistungshalbleiterschalter S₃, S₄, S₅, S₆ eingeschaltet, die übrigen ausgeschaltet. Die an dem Transformator 5 primärseitig anliegende Frequenz entspricht dem Doppelten der Frequenz der Modulationsstrategie der Figur 3 und dem Vierfachen der Frequenz der Modulationsstrategie der Figur 2.

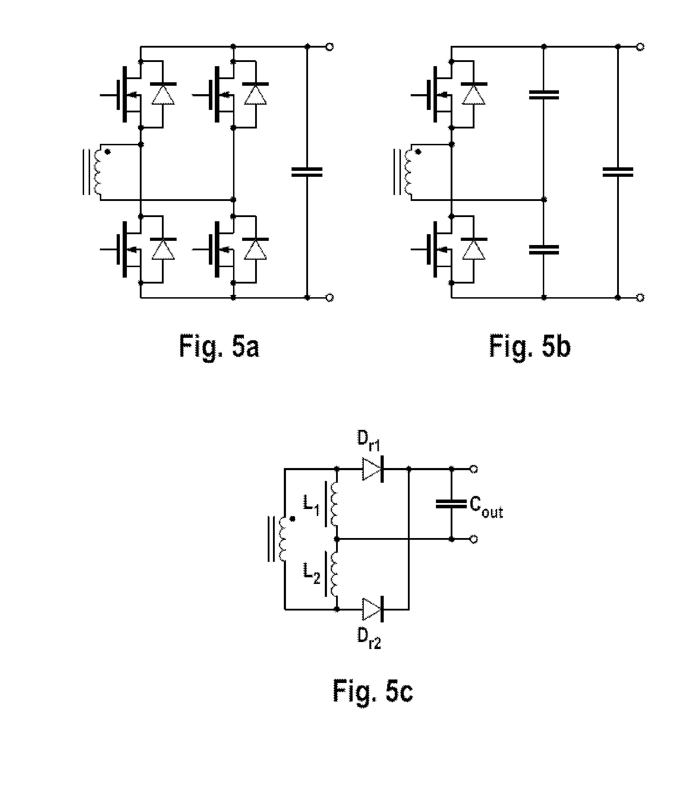

In den Figuren 5a, 5b und 5c sind alternative Ausführungen des sekundärseitigen Gleichrichters 6 dargestellt. Figur 5a zeigt einen bidirektionalen Gleichrichter in einem Vollbrückenaufbau und Figur 5b einen Halbbrückenaufbau eines bidirektionalen Gleichrichters. Figur 5c zeigt einen Ausgangsgleichrichter mit einem Mittenabgriffaufbau zur Verdopplung des Ausgangsstromes. Diese Variante ermöglicht eine Reduzierung des Ausgangsripples. Alternative Ausführungsformen können eine Spannungsverdoppelungsstruktur vorsehen. Durch die Verwendung aktiver Bauelemente wie Leistungshalbleiterschalter kann ein bidirektionaler Leistungsfluss erreicht werden, d. h. die eine Eingangsspannung kann sekundärseitig angelegt werden und so ein Leistungsabgriff an dem Eingang der DC-DC-Wandlerschaltung 1 ermöglichen. Anstelle des 2-Pegel-Vollbrücken- oder -Halbbrückenaufbaus, die in den Figuren 5a und 5b gezeigt sind, können auch 3-Pegelkonfigurationen oder 5-Pegelkonfigurationen, wie z. B. entsprechend dem Umrichter der Eingangsseite, verwendet werden. Auch können Siliziumkarbid- oder Siliziumbauelemente, wie z. B. MOSFETs, JFETs, BJTs oder IGBTs dazu verwendet werden.

Bei der Vollbrückenschaltung der Figur 5a sind die Dioden des Diodenbrückengleichrichters 6 durch entsprechende Leistungshalbleiterschalter ersetzt, die durch die Steuereinheit 7 so angesteuert werden, dass jeweils nur Halbwellen einer Eingangsspannung einer Polarität auf eine der entsprechenden Ausgangsleitungen angelegt werden. In der alternativen Ausführungsform der Figur 5b ist eines der seriell geschalteten Leistungshalbleiterschalterpaare durch Kondensatoren ersetzt, um ein Zwischenkreispotential bereitzustellen.

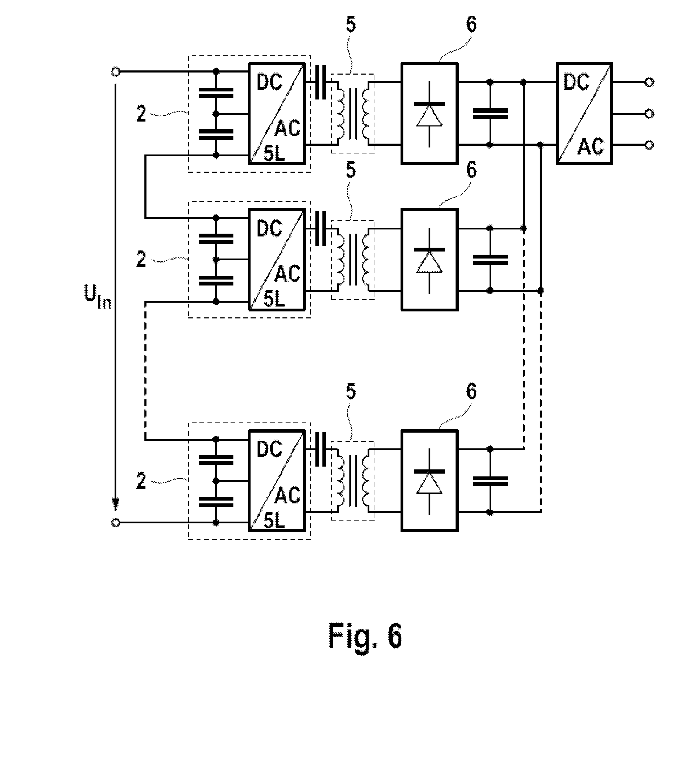

Die Wandlerschaltung 1, die in Figur 1 dargestellt ist, kann als Blockschaltung verwendet werden, um ein Wandlersystem modular aufzubauen. Dies ermöglicht die Anpassung an erforderliche Eingangsspannungen, Ausgangsspannung und erforderliche Leistungen. In Figur 6 ist beispielsweise ein vereinfachtes Blockdiagramm dargestellt, bei dem mehrere Umrichter 2 eingangsseitig seriell und ausgangsseitig parallel verschaltet sind, um für eine hohe Eingangsspannung und für einen hohen Ausgangsstrom ausgelegt zu sein. Die Anzahl der miteinander so verbundenen Umrichter 2 ist im Wesentlichen beliebig und hängt von der bereitgestellten Eingangsspannung und den Charakteristiken der verwendeten Bauelemente, insbesondere der Spannungsverträglichkeit der Leistungshalbleiterschalter, ab.

Vorzugsweise ist der Betrieb jedes Umrichters 2 bei einer derartigen Verschaltung zueinander phasenversetzt, um eine Auslöschung des Ripples zu erreichen.

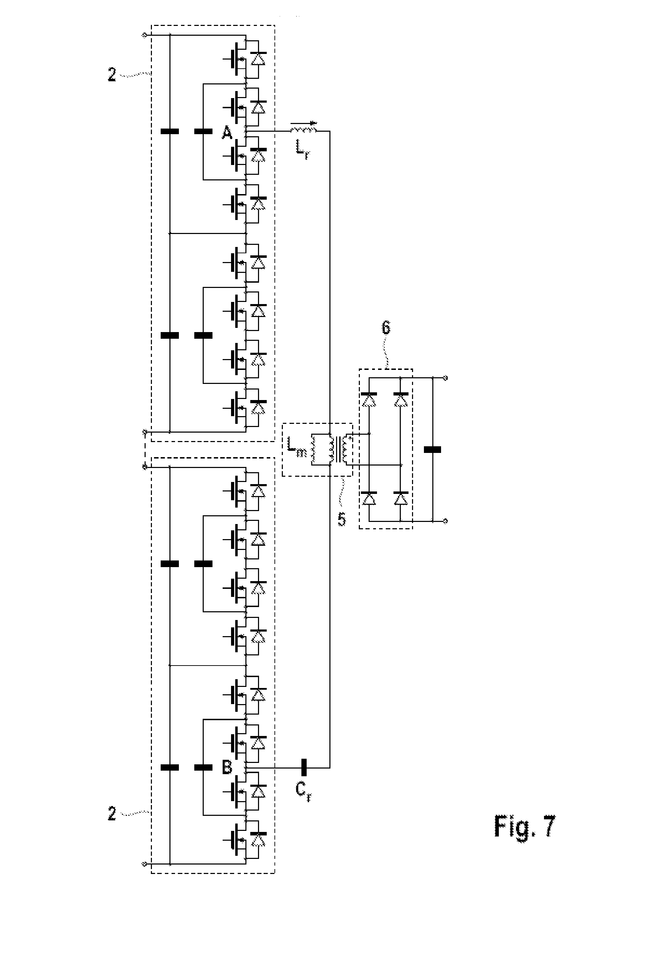

Figur 7 zeigt eine weitere Ausführungsform, bei der lediglich die Umrichter 2 mehrerer DC-DC-Wandlerschaltungen 1 zueinander in Reihe geschaltet sind, wobei lediglich der erste Umrichterausgang A des an dem höchsten Eingangspotential angeschlossenen Umrichters 2 und der zweite Umrichterausgang B des an dem niedrigsten Eingangspotential angeschlossenen Umrichters 2 über eine gemeinsame Resonanzschaltung 4 mit der Primärspule des Transformators 5 verbunden sind. Mit anderen Worten werden mehr als zwei Stellerschaltungen 21, 22 in Reihe geschaltet, wobei lediglich die Stellerschaltung 21, 22 an dem höchsten Eingangspotenzial und die Stellerschaltung an dem niedrigsten Eingangspotential die an die Resonanzschaltung 4 angelegten Umrichterausgänge A, B bereitstellen. Dies ermöglicht es, nur einen Transformator 5 für ein solches Wandlersystem zu verwenden. Als Modulationsstrategien können sowohl für das Wandlersystem der Figur 6 als auch für das Wandlersystem der Figur 7 die Modulationsstrategien der Figuren 2 bis 4 verwendet werden. Bei Verwendung von mehreren Umrichtern 2 ist eine Phasenverschiebung zwischen dem Schalten der Leistungshalbleiterschalter der Umrichter 2 sinnvoll, um eine Frequenzauslöschung an den Anschlüssen der Umrichter 2 und des Transformators 5 zu erreichen.

Eine alternative Modulationsstrategie besteht darin, den Umrichter bei der Resonanzfrequenz der Resonanzschaltung 4 zu betreiben. Dabei wird die Resonanzkapazität Cᵣ der Resonanzschaltung 4 so angepasst, dass die Schaltfrequenz, mit der die Umrichter 2 angesteuert werden, der Resonanzfrequenz der Resonanzschaltung entspricht. Das Einstellen der Ausgangsspannung kann dann durch Pulsweiten- oder Phasenmodulationsstrategien erreicht werden. Dabei kann es notwendig sein, ausgangsseitig nach dem Gleichrichter 6 eine Induktivität zu verwenden, um so einen Stromripple zu reduzieren. Das Diagramm zur Darstellung der Signalverläufe sowie der Verläufe der Umrichterspannung U_{AB} und der Resonanzschaltungsströme bei dieser Modulationsstrategie zeigt, dass bei Abgleich der Schaltfrequenz, mit der die Leistungshalbleiterschalter S₁ - S₈ angesteuert werden, auf die Resonanzfrequenz der Resonanzschaltung die Ströme durch die erste Resonanzinduktivität Lᵣ und durch die zweite Resonanzinduktivität Lₘ im Wesentlichen analog zur Umrichterspannung U_{AB} rechteckig verlaufen. Durch entsprechende Pulsweitenmodulation werden die Impulse der Umrichterausgangsgröße (Umrichterspannungsimpulse) durch aufeinanderfolgendes Einschalten des ersten Leistungshalbleiterschalters S₁ (bei eingeschaltetem dritten, fünften und sechsten Leistungshalbleiterschalter S₃, S₅, S₆), des zweiten Leistungshalbleiterschalters S₂ (bei eingeschaltetem vierten, fünften und sechsten Leistungshalbleiterschalter S₄, S₅, S₆), des achten Leistungshalbleiterschalters S₈ (bei eingeschaltetem dritten, vierten und sechsten Leistungshalbleiterschalter S₃, S₄, S₆) und des siebten Leistungshalbleiterschalters S₇ (bei eingeschaltetem dritten, vierten und fünften Leistungshalbleiterschalter S₃, S₄, S₈) erzeugt. Durch Variation der Einschaltzeitdauer der Leistungshalbleiterschalter S₁, S₂, S₅, S₇ kann die Leistungsübertragung über den Transformator 5 und die Ausgangsspannung eingestellt werden.

Die Leistungshalbleiterschalter S₁ bis S₈ werden so betrieben, dass sie spannungslos schalten, indem sie die in der Streuinduktanz des Transformators 5 oder der Hilfsinduktanz gespeicherte Energie verwenden. Zusätzlich kann zum Erreichen eines spannungslosen Schaltbetriebs auch die Energie in der Ausgangsinduktivität, die auf die Primärseite wirkt, oder die Magnetisierungsinduktivität verwendet werden. Hilfsschaltungen auf Primär- oder Sekundärseite können eingesetzt werden, um andere das Schalten unterstützende Betriebsarten als die spannungslose oder stromlose Schaltbetriebsart zu erreichen.

Um den Strom- bzw. Spannungsripple auf der Ausgangsseite bei dieser Modulationsstrategie zu reduzieren, kann zwischen dem Ausgang des Gleichrichters 6 und der Ausgangskapazität C_{A} noch eine Induktivität vorgesehen sein.

### Bezugszeichenliste

- 1: DC-DC-Wandlerschaltung
- 2: Umrichter
- 4: Resonanzschaltung
- 5: Transformator
- 6: Gleichrichter
- 21: erste Stellerschaltung
- 22: zweite Stellerschaltung
- S₁ bis S₈: erster bis achter Leistungshalbleiterschalter
- U_{In}: Eingangsspannung
- E₁, E₂: Eingangsanschlüsse
- Z: Zwischenkreispunkt
- C_{SS1}, C_{SS2}: erste, zweite Zwischenkapazität
- C_{A}: Ausgangskapazität
- Lᵣ: erste Resonanzinduktivität
- Lₘ: zweite Resonanzinduktivität
- Cᵣ: Resonanzkapazität

## Patentansprüche

1. DC-DC-Wanderschaltung (1) zum Umwandeln einer Eingangsgröße (U_{In}) in eine Ausgangsgröße (U_{A}), umfassend:
- einen Umrichter (2) zum Empfangen der Eingangsgröße und zum Generieren einer getakteten Umrichterausgangsgröße (U_{AB});
- einen Transformator (5) zum Umsetzen einer von der Umrichterausgangsgröße (U_{AB}) des Umrichter (2) abhängigen Primärgröße in eine Sekundärgröße;
- einen Gleichrichter (6) zum Generieren der Ausgangsgröße (U_{A}) durch Gleichrichten der von dem Transformator (5) bereitgestellten Sekundärgröße,
wobei der Umrichter (2) einem Mehr-Pegel-Umrichter entspricht, der durch serielle Verschaltung von mehreren drei- oder mehrstufigen Stellerschaltungen (21, 22) ausgebildet ist, wobei mindestens zwei der Stellerschaltungen (21, 22) einen Umrichterausgang (A, B) aufweisen, um die Umrichterausgangsgröße (U_{AB}) bereitzustellen.

2. Wandlerschaltung (1) nach Anspruch 1, wobei der Umrichter als 5-Pegel-Umrichter (2) vorgesehen ist, wobei die Stellerschaltungen (21, 22) als dreistufige Stellerschaltungen ausgebildet sind.

3. Wandlerschaltung (1) nach Anspruch 2, wobei die dreistufige Stellerschaltung (21, 22) eine Serienschaltung eines ersten Leistungshalbleiterschalters (S₁, S₅), eines zweiten Leistungshalbleiterschalters (S₂, S₆), eines dritten Leistungshalbleiterschalters (S₃, S₇)und eines vierten Leistungshalbleiterschalters (S₄, S₈)aufweist, wobei ein erster Anschluss des ersten Leistungshalbleiterschalters (S₁, S₅) mit einem hohen Potenzial und ein zweiter Anschluss des vierten Leistungshalbleiterschalters (S₄, S₈) mit einem niedrigen Potenzial verbunden ist, wobei ein zweiter Anschluss des ersten Leistungshalbleiterschalters (S₁, S₅) und ein erster Anschluss des vierten Leistungshalbleiterschalters (S₄, S₈) über eine Zwischenkapazität (C_{SS1}, C_{SS2}) verbunden sind, und wobei der erste Anschluss des ersten Leistungshalbleiterschalters (S₁, S₅) und der zweite Anschluss des vierten Leistungshalbleiterschalters (S₄, S₈) über eine Zwischenkreiskapazität (C_{In1,} C_{In2}) verbunden sind.

4. Wandlerschaltung (1) nach Anspruch 3, wobei die Leistungshalbleiterschalter (S₁ - S₈) ganz oder teilweise als MOSFETs, JFETs, BJTs oder IGBTs auf Siliziumbasis oder Siliziumkarbidbasis ausgebildet sind

5. Wandlerschaltung (1) nach Anspruch 3 oder 4, wobei die Umrichterausgangsgröße (U_{AB}) zwischen einem ersten und einem zweiten Umrichterausgang (A, B) abgreifbar ist, wobei der erste Umrichterausgang (A) an der Verbindung zwischen dem zweiten und dritten Leistungshalbleiterschalter (S₂, S₃) einer der Stellerschaltungen (21) und wobei der zweite Umrichterausgang (B) an der Verbindung zwischen dem zweiten und dritten Leistungshalbleiterschalter (S₆, S₇) einer weiteren der Stellerschaltungen (22) abgreifbar ist.

6. Wandlerschaltung (1) nach einem der Ansprüche 1 bis 5, wobei zwischen dem Umrichter (2) und dem Transformator (5) eine Resonanzschaltung (4) vorgesehen ist, um einen Resonanzkreis mit der Primärseite des Transformators (5) zu bilden, wobei die Resonanzschaltung (4) eine erste Resonanzinduktivität (Lᵣ), die in Reihe zu einer Primärseite des Transformators (5), eine zweite Resonanzinduktivität (Lₘ), die parallel zur Primärseite des Transformators (5) und eine Resonanzkapazität (Cᵣ), die in Reihe zur Primärseite des Transformators (5) geschaltet sind.

7. Wandlerschaltung (1) nach einem der Ansprüche 1 bis 6, wobei der Gleichrichter (6), der an einer Sekundärseite des Transformators (5), an der die Sekundärgröße bereitgestellt wird, angeschlossen ist, als Diodenbrückengleichrichter, als aktiver Vollbrückengleichrichter oder als aktiver Halbbrückengleichrichter ausgebildet ist.

8. Wandlerschaltung (1) nach einem der Ansprüche 1 bis 6, wobei der Transformator (5) mehrere Sekundärspulen aufweist, wobei Ausgänge der Sekundärspulen gleichgerichtet werden und die gleichgerichteten Ausgänge parallel geschaltet sind.

9. Wandlerschaltung (1) nach einem der Ansprüche 1 bis 8, wobei eine Steuereinheit (7)vorgesehen ist, um Leistungshalbleiterschalter (S₁ - S₈) der Stellerschaltungen (21, 22) so anzusteuern, dass der Umrichterausgangsgröße (U_{AB}) mit einer Frequenz bereitgestellt wird, die einer Resonanzfrequenz eines mit der Primärseite des Transformators (5) gebildeten Resonanzkreises entspricht,
wobei die Steuereinheit (7) ausgebildet ist, um mit Hilfe einer Pulsweiten- oder
Phasenmodulation von Steuersignalen für die Leistungshalbleiterschalter (S₁ - S₈) die Ausgangsgröße zu variieren.

10. Wandlerschaltung (1) nach einem der Ansprüche 1 bis 8, wobei eine Steuereinheit (7) vorgesehen ist, um Leistungshalbleiterschalter (S₁- S₈) der Stellerschaltungen (21, 22) so anzusteuern, dass die Umrichterausgangsgröße (U_{AB}) mit einer Frequenz bereitgestellt wird, die kleiner ist als eine Resonanzfrequenz eines mit der Primärseite des Transformators (5) gebildeten Resonanzkreises,
wobei die Steuereinheit (7) ausgebildet ist, um die vorbestimmte Ausgangsgröße (U_{A}) durch Variieren der Frequenz der Umrichterausgangsgröße (U_{AB}) zu variieren.

11. Verfahren zum Betreiben einer Wandlerschaltung (1) nach einem der Ansprüche 1 bis 8, wobei die Leistungshalbleiterschalter (S₁ - S₈) der Stellerschaltungen (21, 22) so angesteuert werden, dass der Umrichterausgangsgröße (U_{AB}) mit einer Frequenz bereitgestellt wird, die einer Resonanzfrequenz eines mit der Primärseite des Transformators (5) gebildeten Resonanzkreises entspricht,
wobei die Steuersignale für die Leistungshalbleiterschalter (S₁ - S₈) mit Hilfe einer Pulsweiten- oder Phasenmodulation variiert werden, um die vorbestimmte Ausgangsgröße (U_{A}) bereitzustellen.

12. Verfahren zum Betreiben einer Wandlerschaltung (1) nach einem der Ansprüche 1 bis 8, wobei Leistungshalbleiterschalter (S₁ - S₈) der Stellerschaltungen (21, 22) so angesteuert werden, dass die Umrichterausgangsgröße mit einer Frequenz bereitgestellt wird, die kleiner ist als die Resonanzfrequenz eines mit der Primärseite des Transformators (5) gebildeten Resonanzkreises,
wobei die vorbestimmte Ausgangsgröße (U_{A}) durch Variieren der Frequenz der Umrichterausgangsgröße (U_{AB}) variiert wird.

13. Wandlersystem mit mehreren der Wandlerschaltungen (1) nach einem der Ansprüche 1 bis 10, wobei die Umrichter (2) der Wandlerschaltungen eingangsseitig seriell verschaltet sind und die Wandlerausgänge miteinander parallel verschaltet sind.
